# EUROPÄISCHE PATENTSCHRIFT

(11) **EP 3 208 072 B1**
(45) Veröffentlichungstag und Bekanntmachung des Hinweises auf die Patenterteilung: **15.05.2019**
(21) Anmeldenummer: 16156237.6
(22) Anmeldetag: 18.02.2016
(51) Int. Cl.: B29C 65/20, B29C 65/10, B29C 65/72, B29L 7/00

(54) **SCHWEISSAUTOMAT**
AUTOMATIC WELDING MACHINE
MACHINE DE SOUDAGE AUTOMATIQUE

(43) Veröffentlichungstag der Anmeldung: 23.08.2017
(73) Patentinhaber: Leister Technologies AG, 6056 Kägiswil (CH)
(72) Erfinder: Niederberger, Adolf, 6056 Kägiswil (CH); von Wyl, Bruno, 6056 Kägiswil (CH); Frei, Mathias, 6005 Luzern (CH)
(74) Vertreter: Klocke, Peter

(56) Entgegenhaltungen:
- DE-A1- 3 303 092

## Beschreibung

Die Erfindung betrifft einen Schweißautomaten zum randseitigen, überlappenden Verschweißen von Kunststoffbahnen, mit einem fahrbaren Tragrahmen, einer Heizeinrichtung zum Anschmelzen der Kunststoffbahnen, mindestens zwei gegenüberliegenden, entgegengesetzt drehenden, Anpress- und Vorschubrollen, die über jeweils eine biegsame Welle angetrieben sind, sowie einer Antriebseinrichtung mit einem Antriebsmotor und mindestens einem Getriebe zum Antrieb der Anpress- und Vorschubrollen.

Gattungsgemäße Schweißautomaten sind allgemein bekannt und werden zum Verschweißen von Folien, beispielsweise aus Kunststoff, entlang ihrer überlappenden Randbereiche eingesetzt. Dabei werden die Kunststoffbahnen im Nahtbereich mittels Wärmeeintrag plastifiziert und anschließend unter Druckeinwirkung zusammengepresst.

Die Offenlegungsschrift DE 33 03 092 A1 offenbart eine Schweißvorrichtung für Bahnen oder Platten aus thermoplastischem Kunststoff; welche aus einer durch ein Druckrollenpaar mit zwei antreibbaren Druckrollen gebildeten Anpressvorrichtung besteht, welche an einer gegebenenfalls mit Laufrollen versehenen Halteeinrichtung, die auch einen keilförmigen Heizkörper aufweist, der vor den in ihrem gegenseitigen Abstand veränderbaren Druckrollen angeordnet ist. Für eine einfache Konstruktion und einen problemlosen Einzug der Bahnen sind die beiden Druckrollen unabhängig voneinander angetrieben, wobei die drehfeste Verbindung von der einen Druckrolle zum zugeordneten Antrieb U-förmig durch eine in einem U-förmig gebogenen Rohr geführte biegsame Welle verläuft, wobei das U-förmige Rohr über eine vertikale Schwenkachse sowie eine lösbare Arretierung mit einer Halteeinrichtung verbunden ist.

Die EP 1 900 501 A1 offenbart einen Schweißautomaten zum Verbinden seitlich überlappender Dichtungsbahnen. Der Schweißautomat weist ein mittels Fahrrollen verfahrbares Tragrahmen sowie eine vom Tragrahmen getragene Heizeinrichtung zum Anschmelzen der zu verschweißenden Kunststoffbahnen auf. Die Kunststoffbahnen werden mittels einer am Tragrahmen angeordneten und von einer Antriebseinheit angetriebenen Anpress- und Vorschubrolle zusammengepresst.

In der Praxis zeigt sich, dass dünne Materialien (0,1 bis 1,0 mm) beim überlappenden Verschweißen sich als besonders anfällig für die Ausbildung von Wellen in der verschweißten Bahn erweisen. Ein zeitnahes Reagieren auf die Wellenausbildung seitens des Anwenders wird häufig durch eine beeinträchtigte Einsicht in den Schweißprozess erschwert. Die Einsicht wird durch zahlreiche unmittelbar an der Schweißnaht angeordnete Systemkomponenten wie Heizeinrichtung, dicke Anpress- und Vorschubrollen sowie Anpressvorrichtung erschwert. Problematisch zeigt sich zudem der je nach gewünschter Nahtgeometrie oder dem Verschmutzungsgrad der Lauffläche notwendige Tausch der Anpress- und Vorschubrollen.

Ausgehend von dem vorstehend beschriebenen Stand der Technik liegt der Erfindung die Aufgabe zu Grunde einen handlichen Schweißautomaten zum Verschweißen von Kunststoffbahnen vorzuschlagen, der dem Anwender eine gute Einsicht in den Schweißprozess und gute Zugänglichkeit zu den Anpress- und Vorschubrollen gewährt, sowie konstruktive Maßnahmen zur Steigerung der Qualität der Schweißverbindung aufweist.

Diese Aufgabe wird erfindungsgemäß durch einen Schweißautomaten mit den Merkmalen des Anspruchs 1 gelöst. Weitere vorteilhafte Ausgestaltungen sind den rückbezogenen Ansprüchen zu entnehmen.

Danach werden bei dem erfindungsgemäßen Schweißautomaten zum randseitigen, überlappenden Verschweißen von Kunststoffbahnen das von einer Antriebseinheit bereitgestellte Drehmoment und die Drehgeschwindigkeit mittels biegsamen Wellen zwischen einem Getriebe und den Anpress- und Vorschubrollen übertragen. Die mindestens zwei Anpress- und Vorschubrollen sind einander gegenüberliegend angeordnet und drehen entgegengesetzt zueinander.

Eine biegsame Welle zeichnet sich im Gegensatz zu einer starren Welle dadurch aus, dass die Drehachse an einem Ende der Welle, beispielsweise an einem Getriebeanschluss, und die Drehachse an einem anderen Ende der Welle, beispielsweise an einer Anpress- und Vorschubrolle, beliebig zu einander ausrichtbar sind. Biegsame Wellen bestehen üblicherweise aus mehreren Lagen entgegengesetzt schraubenförmig umeinander gewundener Drähte, die in einem Metall- oder Kunststoffschutzschlauch rotieren. Als alternative Materialien kommt auch Gummi oder Kunststoff in Frage. Biegsame Wellen haben eine Vorzugsdrehrichtung, die von der obersten Lage der schraubenförmig gewundenen Drähte abhängt. Die biegsamen Wellen sind entsprechend ihrer Vorzugsdrehrichtung im Schweißautomaten angeordnet. Durch die Übertragung der Drehgeschwindigkeit und des Drehmoments über die biegsamen Wellen, kann die relativ klobige Antriebseinrichtung von dem Bereich zwischen den Anpress- und Vorschubrollen, wo das Verschweißen der Kunststoffbahnen stattfindet, räumlich gut getrennt werden. Der Bereich um die Anpress- und Vorschubrollen kann unverbaut bleiben. Die Drehachsen des Getriebes und der Anpress- und Vorschubrollen müssen nicht identisch sein wie bei einer starren Welle, sondern können parallel oder gar windschief zu einander angeordnet sein.

Die freie Anordnung der einzelnen Komponenten dank der Leistungsübertragung mittels biegsamen Wellen erlaubt es einen kompakten Schweißautomat mit gleichzeitig gut einsehbarem Schweißprozess zu realisieren. Ein weiterer Vorteil des erfindungsgemäßen Schweißautomaten ist eine deutlich vereinfachte Konstruktion, da die Momente direkt von dem Getriebe zu den Anpress- und Vorschubrollen übertragen werden. Im Gegensatz zu alternativen Methoden ein Drehmoment zwischen zwei nicht fluchtenden Drehachsen zu übertragen (Kettenräder und Ketten, starre Wellen mit Kardangelenk, Umlenkgetriebe), können mit den biegsamen Wellen zahlreiche verlustbehaftete Getriebeelemente eingespart und eine wartungsfreie Momentenübertragung realisiert werden. Ein weiterer Vorteil besteht in der leichten Zugänglichkeit der frei angeordneten Anpress- und Vorschubrollen, was einen schnellen und einfachen Wechsel der Anpress- und Vorschubrollen erlaubt, je nach gewünschter Nahtgeometrie.

Die Anpress- als auch die Vorschubrollen werden durch jeweils eine biegsame Welle angetrieben.

Der Schweißautomat weist sowohl den Antrieb der Anpress- als auch der Vorschubrollen auf, und zwar durch jeweils eine biegsame Welle.

Die Ausgestaltung des Schweißautomaten sieht vor, dass bei der Antriebseinrichtung, welche einen Antriebsmotor und mindestens ein Getriebe umfasst, das zwischen dem Antriebsmotor und den biegsamen Wellen angeordnete Getriebe als ein Schneckengetriebe ausgeführt ist. Grundlegend umfasst das Schneckengetriebe eine mit einem Schraubengang versehene Welle, die sogenannte Schnecke, und mindestens zwei in der Schnecke kämmende (schrägverzahnte) Zahnräder, sogenannte Schneckenräder. Die beiden Schneckenräder weisen dasselbe Übersetzungsverhältnis auf und sind an den gegenüberliegenden Seiten der Schnecke angeordnet, wodurch eine synchrone, aber entgegengesetzte Drehbewegung der Schneckenräder gewährleistet wird. Bei einer Ausführungsform des Schweißautomaten mit abweichenden Durchmessern der Anpress- und Vorschubrollen kann über eine entsprechende Anpassung der Übersetzungsverhältnisse der Schneckenräder die Drehgeschwindigkeit der biegsamen Wellen angepasst werden.

Die Schnecke kann direkt von einer Antriebswelle des Antriebsmotors angetrieben werden, während an die Schneckenräder die biegsamen Wellen verdrehsicher gefügt sind. Diese Anordnung liefert automatisch die richtigen entgegengesetzten Drehrichtungen für die einander gegenüber angeordnete Anpress- und Vorschubrollen. Gleichzeitig wird mit dem Schneckengetriebe eine hohe Untersetzung zwischen Antriebsmotor- und Wellendrehzahl in einem Schritt realisiert. Darüber hinaus zeichnet sich ein Schneckengetriebe durch hohe mechanische Belastbarkeit und besonders geräuscharmen Betrieb aus. Um eine noch höhere Übersetzung zu erzielen, als dies alleine durch das Schneckengetriebe möglich ist, kann zwischen dem Motor und den Schneckengetriebe ein zusätzliches Getriebe, beispielsweise ein Planetengetriebe, angeordnet werden.

In einer weiteren zweckmäßigen Ausführungsform des Schweißautomaten weist der fahrbare Tragrahmen stabile Ausleger entsprechend der Anzahl der Anpress- und Vorschubrollen auf. An ihren Enden tragen die Ausleger jeweils eine Anpress- und Vorschubrolle. Die gegenüberliegenden Anpress- und Vorschubrollen sind durch die dazwischen verlaufenden Kunststoffbahnen, die miteinander zu verschweißen sind, getrennt. Dementsprechend ist auch mindestens ein Ausleger auf einer Seite der Kunststoffbahn angeordnet, während mindestens ein anderer Ausleger auf der gegenüberliegenden Seite der zu verschweißenden Kunststoffbahnen verläuft. Es hat sich als vorteilhaft erwiesen, dass mindestens ein Ausleger fest und unbeweglich mit dem fahrbaren Tragrahmen verbunden ist, während der mindestens eine gegenüberliegende Ausleger vertikal schwenkbar am Tragrahmen angeordnet ist. Durch Schwenken des schwenkbar angeordneten Auslegers kann ein Spalt zwischen den gegenüberliegenden Anpress- und Vorschubrollen geschlossen und die dazwischen befindlichen Kunststoffbahnen zum Verschweißen eingespannt werden. Selbstverständlich können auch beide Arme schwenkbar ausgebildet sein.

Eine weitere bevorzugte Ausführungsform der Erfindung zeichnet sich dadurch aus, dass die stabilen Ausleger mit den Anpress- und Vorschubrollen an ihren Enden hohl ausgebildet sind und in ihrem Inneren jeweils eine biegsame Welle aufnehmen. Die Wellen sind reibungsarm in den hohlen Auslegern aufgenommen, so dass ihre Rotation nicht gestört wird. Dadurch kann der Schweißautomat besonders kompakt konstruiert werden und die biegsamen Wellen haben eine stabile Führung in ihrer gebogenen Lage. Die hohlen Ausleger können sowohl eine geschlossene als auch eine offene, c-förmige Querschnittsgeometrie aufweisen, solange eine stabile Führung für die biegsamen Wellen gewährleistet ist.

Eine weitere vorteilhafte Ausführung des Schweißautomaten sieht eine Spannvorrichtung zur Erzeugung einer Spannkraft zwischen den gegenüberliegenden Anpress- und Vorschubrollen vor. Es hat sich als zweckmäßig erwiesen die Spannvorrichtung am schwenkbar an dem Tragrahmen angeordneten Ausleger anzuordnen. Durch das Schwenken des Auslegers wird der Spalt zwischen den gegenüberliegenden Anpress- und Vorschubrollen erst geschlossen und anschließend die Spannkraft aufgebaut. Das Schwenken des schwenkbaren Auslegers erfolgt über einen Betätigungshebel. Dabei wird, mittels einer exzentrischen Lagerung des Betätigungshebels an der Spannvorrichtung, ein vom Betätigungshebel durchlaufener Drehwinkel in einen kleineren Drehwinkel der Spannvorrichtung und des mit der Spannvorrichtung verdrehsicher verbundenen schwenkbaren Auslegers gewandelt.

In einer bevorzugten Ausführungsform der Erfindung basiert die Spannvorrichtung auf einem federnden Element, beispielsweise einer Spannfeder in Form einer Schraubenfeder, und wird, genauso wie das Schwenken des schwenkbaren Auslegers, über den Betätigungshebel bedient. Das federnde Element ist bezüglich ihrer Kraftachse exzentrisch zu einem Drehpunkt des Betätigungshebels mit dem Betätigungshebel verbunden. Durch Umlegen des Betätigungshebels aus einer Stellung, bei der die Anpress- und Vorschubrollen offen zu einander stehen, in eine Stellung, bei der die Anpress- und Vorschubrollen geschlossen sind, wird das federnde Element zusammengedrückt und eine entsprechende Federkraft aufgebaut. Die aufgebaute Federkraft wirkt als ein Drehmoment auf den schwenkbaren Ausleger und erzeugt die notwendige Spannkraft zwischen den gegenüberliegenden Anpress- und Vorschubrollen. Die Spannkraft der Spannvorrichtung kann mittels einer Vorspannung des federnden Elements und/oder durch ein Austauschen des federnden Elements variiert und somit an das zu verschweißende Material, unterschiedliche Bahndicken sowie die verwendeten Anpress- und Vorschubrollen angepasst werden.

Für eine bessere Handhabung, insbesondere bei einem Wechseln der Anpress- und Vorschubrollen oder beim Ansetzen des Schweißautomaten an die miteinander zu verschweißenden Kunststoffbahnen, ist die Spannvorrichtung jeweils in der offenen und geschlossenen Stellung der gegenüberliegenden Anpress- und Vorschubrollen arretierbar. Dazu durchschreitet eine Wirkachse des federnden Elements, in der die Federkraft wirkt, in der jeweiligen Endstellung des Betätigungshebels den Drehpunkt des Betätigungshebels. Auf diese Weise ist eine der Federkraft entgegenwirkende Kraftanstrengung notwendig, um den Betätigungshebel wieder aus der Endstellung heraus zu bewegen.

Bei einer weiteren Ausführungsform ist die auf dem fahrbaren Tragrahmen angeordnete Heizeinrichtung als ein Heißluftgebläse mit einer auf den Nahtbereich der zu verschweißenden Kunststoffbahnen ausgerichteten Heißluftdüse ausgebildet. Der Heißluftstrahl kann entweder gleichmäßig verteilt entlang des Nahtbereichs auf das zu verschweißende Material gerichtet sein oder durch mehrere Düsenöffnungen, welche über die Breite der Heißluftdüse verteilt sind, punktuell konzentriert werden.

Alternativ zum Heißluftgebläse kann der Wärmeeintrag in das zu verschweißende Material auch mittels eines Heizkeils erfolgen. In diesem Fall ist der Heizkeil zwischen den zu verschweißenden Kunststoffbahnen in einer Zuführeinrichtung angeordnet und muss vor Beginn des Schweißvorganges an die Nahtstelle herangeführt und in dieser Stellung arretiert werden.

Eine kombinierte Heizeinrichtung sowohl mit einem Heißluftgebläse als auch einem Heizkeil in einem Schweißautomat ist von Vorteil, da somit eine breitere Auswahl an Kunststoffen bezüglich Material und Bahndicke mit einem Apparat bearbeitet werden kann.

Durch das Umlegen des Betätigungshebels in die Endstellung, bei der die gegenüberliegenden Anpress- und Vorschubrollen geschlossen sind, wird gleichzeitig die jeweilige Heizeinrichtung an die zu verschweißenden Kunststoffbahnen herangefahren. Dazu ist die Heizeinrichtung beweglich (beispielsweise schwenkbar oder linear verfahrbar) am Tragrahmen angeordnet und wird über ein exzentrisch an dem Betätigungshebel angeschlossenen Hebel in die Schweißposition ein- und aus der Schweißposition ausgebracht.

Die über den Betätigungshebel einhändig zu bedienende Spannvorrichtung führt somit die gegenüberliegenden Anpress- und Vorschubrollen an die Kunststofffolien, bringt den nötigen Anpressdruck auf und lässt die eventuell vorhandene Heizeinrichtung ausfahren. Die Kombination dieser Schritte vereinfacht die Bedienung des Schweißautomaten.

Um die Wellenbildung der verschweißten Kunststoffbahnen zu reduzieren, haben sich Anpress- und Vorschubrollen mit besonders kleinem Durchmesser als vorteilhaft erwiesen. Durch kleine Rollendurchmesser wird die Materialanhebung während des Schweißprozesses gering gehalten und die Wellenbildung erfolgreich verringert. Dank den beweglichen Wellen ist eine besonders kompakte Bauweise des Schweißautomaten realisierbar und die Anpress- und Vorschubrollen sind räumlich von dem klobigen Getriebe getrennt. Daher beträgt der Durchmesser der Anpress- und Vorschubrollen in einer bevorzugten Ausführung des Schweißautomaten nicht mehr als 25 mm, und liegt vorzugsweise zwischen 20 mm und 25 mm.

Üblicherweise haben die gegenüberliegenden Anpress- und Vorschubrollen einen gleichen Durchmesser und damit dieselbe Drehgeschwindigkeit, es ist jedoch auch denkbar abweichende Rollendurchmesser mit entsprechend angepassten Drehgeschwindigkeiten zu verwenden. In einer Ausführungsform des Schweißautomaten, bei der die Anpress- und Vorschubrollen unterschiedliche Durchmesser aufweisen, ist es ausreichend, wenn nur diejenige Rolle, die die Kunststoffbahnen anhebt, das obige Kriterium bezüglich des Durchmessers erfüllt.

Um die Ausbildung der Wellen weiter zu mindern, können die Anpress- und Vorschubrollen in ihrer Längsachse breiter ausgebildet sein als die Breite der Schweißnaht und dadurch der Transport der Kunststoffbahnen insofern verbessert werden, als dass der Antrieb im kalten, festen Bereich der Kunststoffbahnen erfolgt.

Eine bevorzugte Ausführungsform der Erfindung sieht vor, dass der Antriebsmotor der Antriebseinheit als ein Scheibenläufermotor ausgebildet ist. Dabei handelt es sich vorzugsweise um einen bürstenlosen, mit Gleichstrom betriebenen Gleichstrommotor.

Nachfolgend wird die Erfindung anhand eines in den Zeichnungen dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht werden. Es zeigen:
- Figur 1: eine isometrische Darstellung des erfindungsgemäßen Schweißautomaten mit gegenüberliegenden Anpress- und Vorschubrollen in einer offenen Stellung;
- Figur 2: eine isometrische Darstellung des erfindungsgemäßen Schweißautomaten mit gegenüberliegenden Anpress- und Vorschubrollen in einer geschlossenen Stellung und aufgebrachter Anpresskraft;
- Figur 3a: eine schematische Darstellung des erfindungsgemäßen Schweißautomaten mit gegenüberliegenden Anpress- und Vorschubrollen in einer offenen Stellung;
- Figur 3b: eine um 180° gedrehte Ansicht der Figur 3a;
- Figur 4a: eine schematische Darstellung des erfindungsgemäßen Schweißautomaten mit gegenüberliegenden Anpress- und Vorschubrollen in einer Zwischenstellung;
- Figur 4b: eine um 180° gedrehte Ansicht der Figur 4a;
- Figur 5a: eine schematische Darstellung des erfindungsgemäßen Schweißautomaten mit gegenüberliegenden Anpress- und Vorschubrollen in einer geschlossenen Stellung mit herausgefahrenem Heizkeil;
- Figur 5b: eine um 180° gedrehte Ansicht der Figur 5a;
- Figur 6: eine Schnittdarstellung durch das Gehäuse des erfindungsgemäßen Schweißautomaten mit einem Schneckengetriebe; und
- Figur 7: eine Schnittdarstellung durch das Schneckengetriebe aus Figur 6.

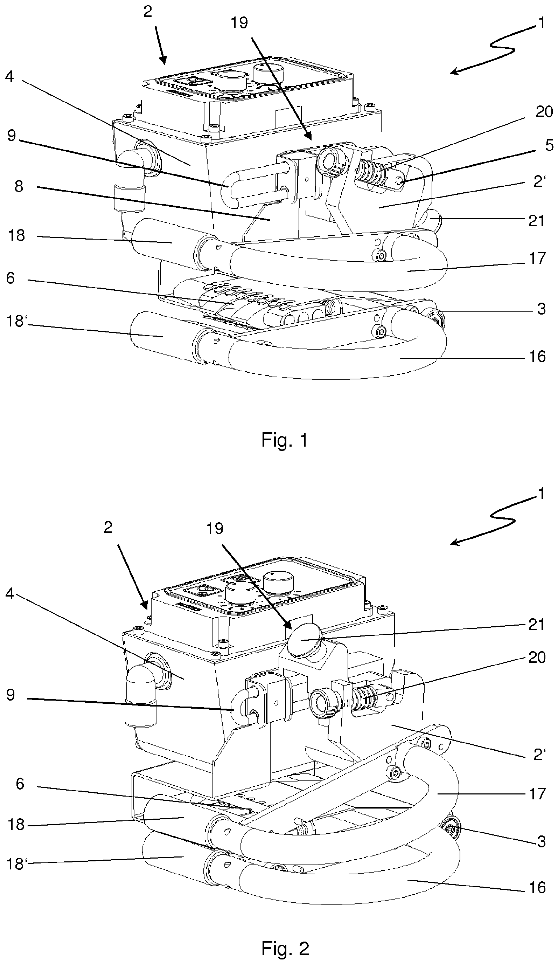

Die Figur 1 zeigt einen erfindungsgemäßen Schweißautomat 1 zum randseitigen, überlappenden Verschweißen von in der Zeichnung nicht dargestellten Kunststoffbahnen. Bei dem dargestellten Schweißautomat handelt es sich um die bevorzugte Ausführungsform, bei der die Anpress- und Vorschubrollen 18 bzw. 18' jeweils über eine biegsame Welle 15, 15' angetrieben werden. Ein Tragrahmen 2 des Schweißautomaten 1 wird auf Fahrrollen 3 verfahrbar getragen. Der Tragrahmen 2 umfasst ein Gehäuse 4, das eine in der Zeichnung nicht dargestellte Antriebseinrichtung mit einem Antriebsmotor 10 und mindestens einem Getriebe 12 beherbergt. An dem Gehäuse 4 bzw. dem Tragrahmen 2 ist auch ein zu dem Tragrahmen 2 gehörender nicht sichtbarer Lagerbock auf dem die Spannvorrichtung 19 gelagert und fixiert ist. Zu der Spannvorrichtung 19 gehört auch ein Tragelement 2' an dem seitlich zwei Ausleger 16, 17 angeordnet sind. Der untere, feste Ausleger 16 ist verdrehsicher mit dem Tragelement 2' verbunden, während der obere, schwenkbare Ausleger 17 in einer senkrechten Ebene zum Tragrahmen 2 über das Tragelement 2' drehbar gelagert ist. Beide Ausleger 16, 17 sind U-förmig geformt und tragen an ihrem freien Ende jeweils eine Anpressrolle 18 und eine Vorschubrolle 18'. Die Anpress- und Vorschubrollen 18 bzw. 18' zeichnen sich durch einen relativ geringen Durchmesser von unter 25 mm aus, bevorzugt liegt ihr Durchmesser in einem Bereich zwischen 20 mm und 25 mm. Die Ausleger 16, 17 sind hohl ausgebildet und führen in ihrem Inneren jeweils eine in der Zeichnung nicht dargestellte biegsame Welle 15, 15' von einem Anschluss an das Getriebe 12 zu den Anpress- und/oder Vorschubrollen 18 bzw. 18'.

Über ein Schwenken des schwenkbaren Auslegers 17 wird ein Spalt zwischen den Anpress- und Vorschubrollen 18 bzw. 18' geschlossen und die dazwischen angeordneten Kunststoffbahnen für den Schweißvorgang geklemmt. Das Schwenken des schwenkbaren Auslegers 17 erfolgt über einen an den Tragelement 2' angeordneten Betätigungshebel 21, wobei der schwenkbare Ausleger 17 verdrehsicher mit dem Tragelement 2' verbunden ist. An dem Tragelement 2' ist ein federndes Element in Form einer Schraubenfeder 20 mit dem einen Ende befestigt. Das andere Ende ist drehbar an dem Betätigungshebel 21 um eine zu der Drehachse 7 des Betätigungshebels 21 parallel verlaufende Drehachse 5 gelagert. Durch die exzentrische Lagerung des federnden Elements 20 an dem Betätigungshebel 21 wird ein vom Betätigungshebel 21 durchlaufener Drehwinkel in einen kleineren Drehwinkel der Tragelements 2' und des mit der Spannvorrichtung verdrehsicher verbundenen schwenkbaren Auslegers 17 gewandelt. Durch Umlegen des Betätigungshebels 21 aus einer Stellung, bei der die gegenüberliegenden Anpress- und Vorschubrollen 18 bzw. 18' offen zu einander stehen, in eine Stellung, bei der die gegenüberliegenden Anpress- und Vorschubrollen 18 bzw. 18' geschlossen sind, wird die Spannfeder 20 zusammengedrückt und eine entsprechende Federkraft aufgebaut. Die aufgebaute Federkraft wirkt als ein Drehmoment auf das Tragelement 2' und damit auf den damit fest verbundenen Ausleger 17, das sich um die Drehachse 24 dreht, und erzeugt die notwendige Spannkraft zwischen den gegenüberliegenden Anpress- und Vorschubrollen 18 bzw. 18'. Die Spannkraft der Spannvorrichtung 19 kann mittels einer Vorspannung der Spannfeder 20 und/oder durch ein Austauschen der Spannfeder 20 variiert und somit an das zu verschweißende Material, unterschiedliche Bahndicken sowie die verwendeten Anpress- und Vorschubrollen 18 bzw. 18' angepasst werden.

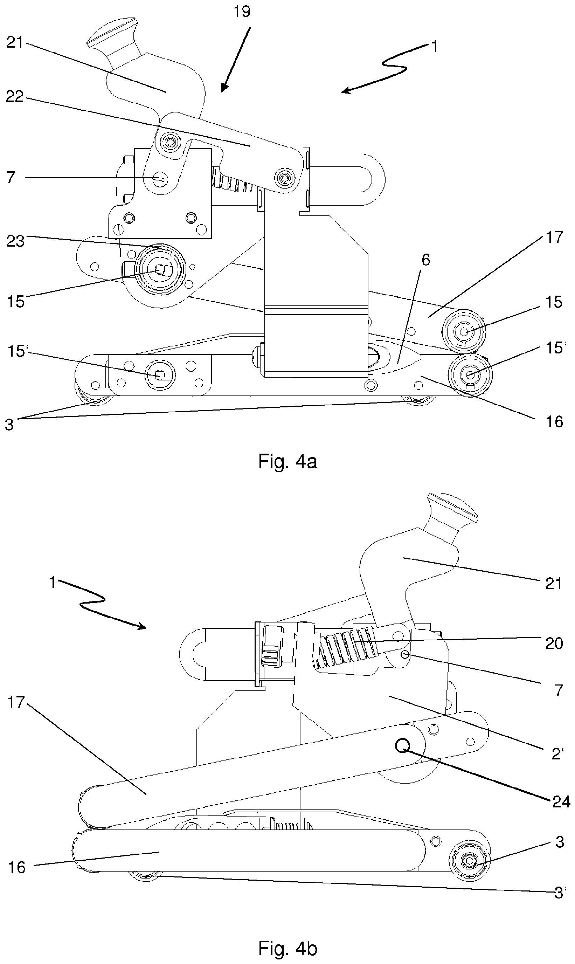

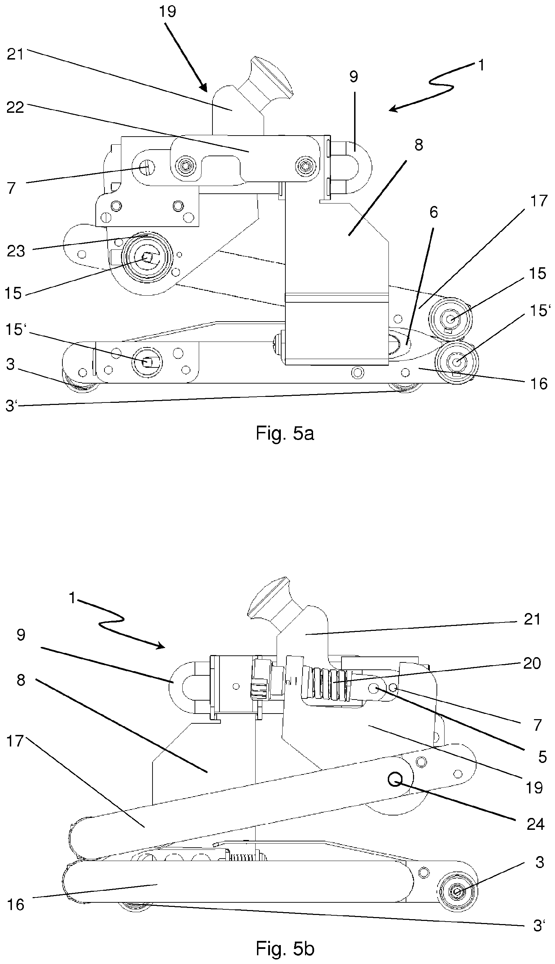

Des Weiteren ist in Figur 1 eine Heizeinrichtung mit einem Heizkeil dargestellt. Der Heizkeil 6 ist in der dargestellten Ausführungsform über einen Heizelementträger 8 linear beweglich an dem Tragrahmen 2 gelagert und muss für den Schweißprozess an eine Schweißnaht zwischen den Anpress- und/oder Vorschubrollen 18 bzw. 18' herangefahren werden. Der Position des Heizkeils wird ebenfalls über den Betätigungshebel 21 gesteuert. Dazu ist der Heizkeil 6 über einen Hebel 22 mit dem Betätigungshebel 21 verbunden, wobei der Hebel 22 exzentrisch zum Drehpunkt 5 des Betätigungshebels 21 mit diesem drehbar verbunden ist. Dadurch wird der Heizelementträger 8 linear entlang der Führung 9 bewegt, wie durch Vergleich der Stellung des Heizkeils 6 in den Figuren 4a und 5a ersichtlich ist. Alternativ oder zusätzlich kann die Heizeinrichtung 6 mit einem in der abgebildeten Ausführungsform nicht vorgesehenen Heißluftgebläse und einer auf die miteinander zu verschweißenden Kunststoffbahnen gerichtete Heißluftdüse realisiert werden.

Der Betätigungshebel 21 hat zwei Endstellungen. In Figur 1 ist der Betätigungshebel 21 in einer offenen Endstellung dargestellt, bei der die gegenüberliegenden Anpress- und Vorschubrollen 18 bzw. 18' einen Spalt zwischen sich aufweisen und der Heizkeil sich in einer maximalen Entfernung zu den Anpress- und Vorschubrollen 18 bzw. 18' befindet. Diese Stellung eignet sich insbesondere zu einem Ausrichten der zu verschweißenden Kunststoffbahnen und/oder zu einem Auswechseln der Anpress- und/oder Vorschubrolle 18 bzw. 18'.

Die Figur 2 zeigt den in Figur 1 beschriebenen Schweißautomat 1, jedoch mit dem in eine andere Endstellung umgelegten Betätigungshebel 21. In dieser Stellung sind die gegenüberliegenden Anpress- und/oder Vorschubrollen 18 bzw. 18' geschlossen. Die in der Zeichnung nicht dargestellten zu verschweißende Kunststoffbahnen befinden sich in dieser Endstellung zwischen den Anpress- und/oder Vorschubrollen 18 bzw. 18'. Die Spannfeder 20 ist maximal gespannt und übt ein Drehmoment auf den schwenkbaren Ausleger 17 aus, so dass zwischen den Anpress- und/oder Vorschubrollen 18 bzw. 18' eine entsprechende Anpresskraft vorhanden ist. Der Heizkeil ist an die Nahtstelle der miteinander zu verschweißenden Kunststoffbahnen herangefahren. Der Betätigungshebel 21 ist in dieser Endstellung arretiert. In den hohl ausgebildeten Auslegern 16, 17 verlaufen jeweils in der Darstellung nicht sichtbare biegsame Wellen 15 bzw. 15' und treiben die Anpress- 18 bzw. Vorschubrolle 18' entgegengesetzt an, so dass der Schweißautomat 1 auf den am Tragrahmen 2 angeordneten Fahrrollen 3 entlang der Kunststoffbahnen verfahrbar ist.

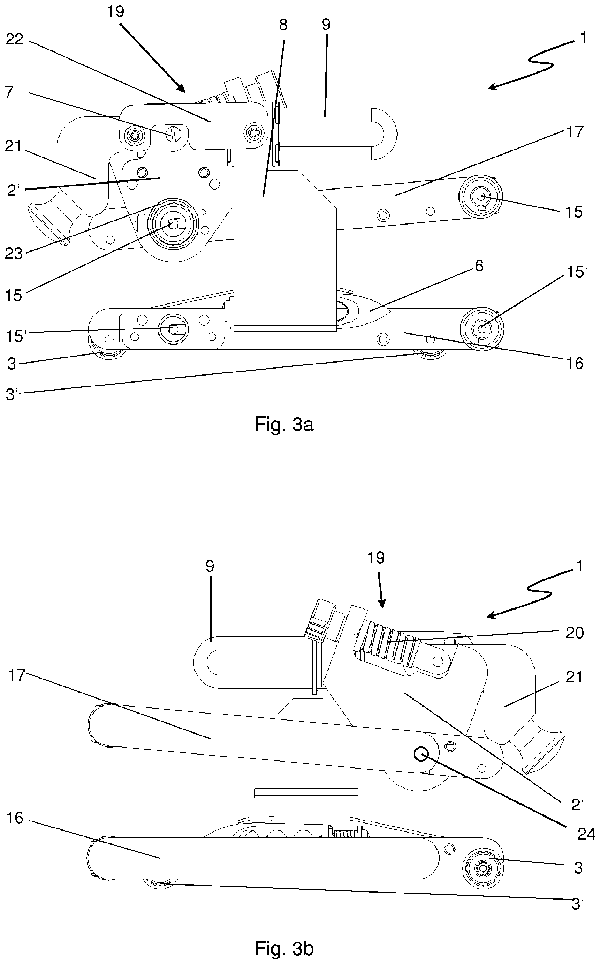

Die Figuren 3a bis 5b zeigen den erfindungsgemäßen Schweißautomat 1 in schematischer Schnittdarstellung. Einer besseren Übersichtlichkeit wegen ist das Gehäuse 4 nicht mit dargestellt. Die Figuren bilden jeweils paarweise eine Stellung des Schweißautomaten 1 ab. Die einzelnen Figurenpaare unterscheiden sich voneinander durch die Stellung des Betätigungshebels 21. Ausgehend von der in den Figuren 3a und 3b gezeigten offenen Stellung der Anpress- und/oder Vorschubrollen 18 bzw. 18', zeigen Figuren 4a und 4b eine Stellung des Betätigungshebel 21 zwischen den beiden Endstellungen mit geschlossenen Anpress- und/oder Vorschubrollen 18 bzw. 18', aber noch ohne aufgebrachte Spannkraft, wohingegen Figuren 5a und 5b die Endstellung mit geschlossenen Anpress- und/oder Vorschubrollen 18 bzw. 18' und durch die zusammengedrückte Spannfeder 20 aufgebrachter Spannkraft zeigt.

Die hohl ausgebildeten Ausleger 16 bzw. 17 führen in ihrem Inneren jeweils eine biegsame Welle 15 bzw. 15'. Der schwenkbare Ausleger 17 und die Spannvorrichtung 19 sind mittels einem Drehgelenk 23 an dem in diesen Zeichnungen nicht dargestellten Gehäuse 4 schwenkbar verbunden, wobei eine biegsame Welle 15 durch das Drehgelenk 23 in den schwenkbaren Ausleger 17 geleitet wird.

Wie vorstehend bereits ausgeführt ist der Betätigungshebel 21 an seinem Drehpunkt 5 schwenkbar angeordnet, so das durch die exzentrische Anordnung der Schraubenfeder 20 an dem Betätigungshebel 21 die vorstehend beschriebene Bewegung des schwenkbaren Auslegers 17 erfolgt. Die einzelnen Schritte sind den Figuren 3, 4 und 5 dargestellt. In Figur 4a und 4b ist die Schraubenfeder 9 von Anfang bis Ende gebogen, auch wenn das in den Figuren nicht so deutlich ersichtlich ist.

Zusätzlich kann noch in einer besonderen Ausgestaltung exzentrisch bezüglich des Drehpunkts 5 über den Hebel 22, wie ebenfalls vorstehend beschrieben, der Heizkeil 6 an die Nahtstelle zwischen den geschlossenen Anpress- und/oder Vorschubrollen 18 bzw. 18' heran geführt bzw. beim Öffnen der Anpress- und/oder Vorschubrollen 18 bzw. 18' wieder zurückgezogen werden, wenn der Betätigungshebel 21 bewegt wird.. Die verknüpfte Steuerung beider Vorgänge dient der Sicherheit des Anwenders. Es wird verhindert, dass in der offenen Stellung der Anpress- und/oder Vorschubrollen 18 bzw. 18' der Heizkeil ausgefahren ist und sich im Eingriffsbereich des Anwenders, beispielsweise bei einem Wechsel der Anpress- und/oder Vorschubrolle 18 bzw. 18', befindet.

Wie bereits erwähnt wird der Betätigungshebel 21 in beiden Endstellungen automatisch arretiert um ein ungewolltes Herausbewegen aus der jeweiligen Endstellung zu vermeiden. Die Arretierung wird erreicht, indem eine Wirkachse der Spannfeder 20, in der die Federkraft wirkt, in der jeweiligen Endstellung des Betätigungshebels 21 die Drehachse 7 des Betätigungshebels 21 durchschreitet und somit ein Herausbewegen des Betätigungshebels 21 aus der Endstellung heraus eine der Federkraft entgegen gerichtete Kraft erfordert.

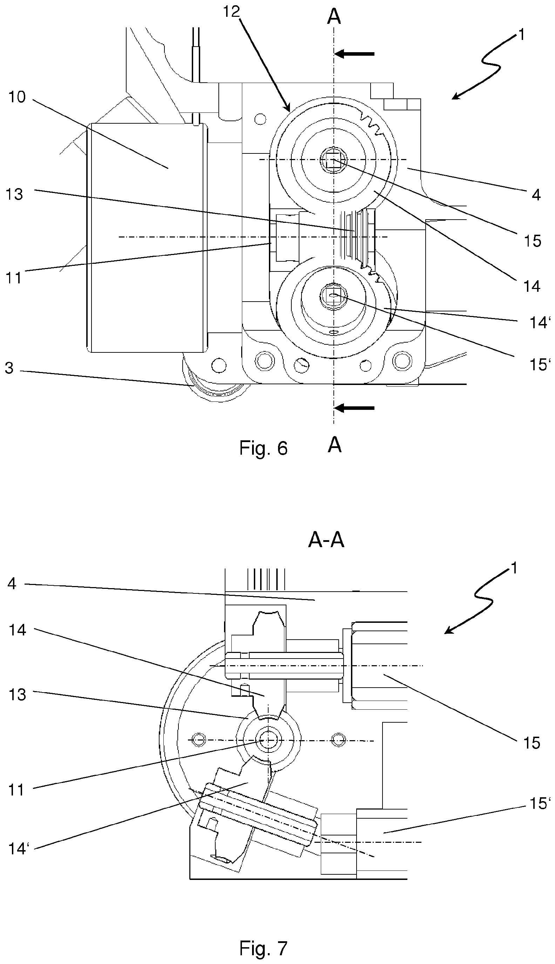

Die Figur 6 zeigt eine Schnittdarstellung durch das Gehäuse 4 des erfindungsgemäßen Schweißautomaten 1. Es ist die Antriebseinrichtung mit dem dazugehörigen Getriebe 12 dargestellt. Auf einer Motorwelle 11 eines Antriebsmotors 10 sitzt eine Schnecke 13 und treibt zwei Schneckenräder 14, 14' an. Die Schneckenräder 14, 14' können durch die Schnecke 13 getrennt, einander gegenüber in einer Ebene angeordnet sein oder, wie im dargestellten Ausführungsbeispiel, in zu einander geneigten Ebenen angeordnet sein. Bei der dargestellten Variante weist das aus der Schnecke 13 und den beiden Schneckenrädern 14, 14' aufgebaute Getriebe 12 eine besonders geringe Einbauhöhe auf. Das führt zu einer besonders kompakten Bauweise des Schweißautomaten 1.

Die Figur 7 zeigt einen Schnitt durch das Getriebe 12 aus Figur 6. Die Verringerung der Einbauhöhe des Getriebes durch die gekippte Ebene des unteren Schneckenrades 14' ist gut erkennbar. Das untere Schneckenrad 14' treibt die biegsame Welle 15' an, die durch den festen Ausleger 16 geführt wird und das obere Schneckenrad 14 treibt die biegsame Welle 15 an, die durch den schwenkbaren Ausleger 17 geführt wird. Die gekippte Stellung des unteren Schneckenrades 14' erlaubt es den festen Ausleger 16 und die daran angeschlossene Vorschubrolle 18' besonders tief an dem Schweißautomat 1 anzuordnen, so dass zusammen mit dem geringen Durchmesser der Anpress- und/oder Vorschubrollen 18 bzw. 18' eine Anhebung der miteinander zu verschweißenden Kunststoffbahnen möglichst gering gehalten wird.

## Patentansprüche

1. Schweißautomat (1) zum randseitigen, überlappenden Verschweißen von Kunststoffbahnen, mit einem fahrbaren Tragrahmen (2), einer Heizeinrichtung (6) zum Anschmelzen der Kunststoffbahnen, mindestens zwei gegenüberliegenden, entgegensetzt drehenden Anpress- (18) und Vorschubrollen (18'), **dadurch gekennzeichnet, dass** die Anpress- (18) und Vorschubrollen (18') von einer Antriebseinrichtung über jeweils eine biegsame Welle (15, 15') angetrieben sind, wobei die Antriebseinrichtung einen Antriebsmotor (10) und mindestens ein Getriebe (12) zum Antrieb der Anpress- und Vorschubrollen (18 bzw. 18') aufweist und das mindestens eine Getriebe (12) als ein Schneckengetriebe (12), vorzugsweise als ein untersetzendes Schneckengetriebe (12), ausgebildet ist, wobei das Schneckengetriebe (12) eine Schnecke (13) und mindestens zwei entgegengesetzt drehende von der Schnecke (13) angetriebene Schneckenräder (14, 14') aufweist.

2. Schweißautomat (1) nach Anspruch 1, **dadurch gekennzeichnet, dass** der Tragrahmen (2) einen unbeweglichen, festen Ausleger (16) mit der Vorschubrolle (18') und einen beweglichen, schwenkbaren Ausleger (17) mit der Anpressrolle (18) aufweist.

3. Schweißautomat (1) nach Anspruch 2, **dadurch gekennzeichnet, dass** beide Ausleger (16 bzw. 17) hohl sind und jeweils eine biegsame Welle (15' bzw. 15) im Inneren aufnehmen.

4. Schweißautomat (1) nach einem der vorangegangenen Ansprüche, **dadurch gekennzeichnet, dass** der Schweißautomat (1) eine Spannvorrichtung (19) zur Erzeugung einer Spannkraft zwischen den gegenüberliegenden Anpress- und/oder Vorschubrollen (18 bzw. 18') aufweist.

5. Schweißautomat (1) nach Anspruch 4, **dadurch gekennzeichnet, dass** der bewegliche, schwenkbare Ausleger (17) die Spannvorrichtung (19) zur Erzeugung einer Spannkraft zwischen den gegenüberliegenden Anpress- und/oder Vorschubrollen (18 bzw. 18') aufweist.

6. Schweißautomat (1) nach Anspruch 4 oder 5, **dadurch gekennzeichnet, dass** die Spannvorrichtung (19) ein austauschbares, federndes Element (20) zur Einstellung der Spannkraft und einen Betätigungshebel (21) zur Bewegung des schwenkbaren Auslegers (17) aufweist.

7. Schweißautomat (1) nach einem der vorangegangenen Ansprüche, **dadurch gekennzeichnet, dass,** die Spannvorrichtung (19) in einer offenen oder geschlossenen Stellung der Anpress- und/oder Vorschubrollen (18 bzw. 18') zueinander arretierbar ist.

8. Schweißautomat (1) nach Anspruch 7, **dadurch gekennzeichnet, dass** der Betätigungshebel (21) mit einem Hebel (22) verbunden ist, der wiederum mit der Heizeinrichtung (6) verbunden ist, so dass über den Betätigungshebel (21) der Spannvorrichtung (19) die Heizeinrichtung (6) ein- und ausfahrbar ist.

9. Schweißautomat (1) nach einem der vorangegangenen Ansprüche, **dadurch gekennzeichnet, dass** die Heizeinrichtung (6) als ein Heißluftgebläse mit einer auf die zu verschweißende Kunststoffbahnen ausgerichteten Heißluftdüse und/oder als ein zwischen den Kunststoffbahnen angeordneter Heizkeil ausgeführt ist.

10. Schweißautomat (1) nach einem der vorangegangenen Ansprüche, **dadurch gekennzeichnet, dass** die Anpress- und/oder Vorschubrollen (18 bzw. 18') einen Durchmesser von unter 25 mm aufweisen, vorzugsweise zwischen 20 mm und 25 mm.

11. Schweißautomat (1) nach einem der vorangegangenen Ansprüche, **dadurch gekennzeichnet, dass** der Antriebsmotor (10) als ein Scheibenläufermotor (10), vorzugsweise bürstenloser, mit Gleichstrom betriebener Gleichstrommotor (10), ausgebildet ist.

## Claims

1. Automatic welding machine (1) for lap welding edges of plastic webs, with a movable supporting frame (2), a heating device (6) for partially melting the plastic webs, at least two opposing, counter-rotating pressing rollers (18) and advancing rollers (18'), **characterized in that** the pressing rollers (18) and advancing rollers (18') are driven by a driving device by way of a respective flexible shaft (15, 15'), whereby the driving device comprises a drive motor (10) and at least one gearbox (12) for driving the pressing and advancing rollers (18 and 18' respectively) and the at least one gearbox (12) is designed as a worm gear mechanism (12), preferably as a gear-reducing worm gear mechanism (12), whereby the worm gear mechanism (12) comprises a worm (13) and at least two counter-rotating worm gears (14, 14') driven by the worm (13).

2. Automatic welding machine (1) according to claim 1, **characterized in that** the supporting frame (2) comprises an immovable, fixed boom (16) including the advancing roller (18') and a movable, pivotable boom (17) including the pressing roller (18).

3. Automatic welding machine (1) according to claim 2, **characterized in that** the two booms (16 and 17 respectively) are hollow and each accommodate a flexible shaft (15' and 15 respectively) on the inside.

4. Automatic welding machine (1) according to any one of the preceding claims, **characterized in that** the automatic welding machine (1) comprises a tensioning device (19) for generating a tension force between the opposing pressing and/or advancing rollers (18 and 18' respectively).

5. Automatic welding machine (1) according to claim 4, **characterized in that** the movable, pivotable boom (17) comprises the tensioning device (19) for generating a tension force between the opposing pressing and/or advancing rollers (18 and 18' respectively).

6. Automatic welding machine (1) according to claim 4 or 5, **characterized in that** the tensioning device (19) comprises a replaceable, spring-loaded element (20) for setting the tension force and an actuating lever (21) for moving the pivotable boom (17).

7. Automatic welding machine (1) according to any one of the preceding claims, **characterized in that** the tensioning device (19) can be locked in an open or closed position of the pressing and/or advancing rollers (18 and 18' respectively) in relation to one another.

8. Automatic welding machine (1) according to claim 7, **characterized in that** the actuating lever (21) is connected to a lever (22), which in turn is connected to the heating device (6), so that the heating device (6) can be retracted and extended by way of the actuating lever (21) of the tensioning device (19).

9. Automatic welding machine (1) according to any one of the preceding claims, **characterized in that** the heating device (6) is designed as a hot air blower comprising a hot air nozzle that is oriented at the plastic webs to be fused and/or as a hot wedge disposed between the plastic webs.

10. Automatic welding machine (1) according to any one of the preceding claims, **characterized in that** the pressing and/or advancing rollers (18 and 18' respectively) have a diameter of less than 25 mm, preferably between 20 mm and 25 mm.

11. Automatic welding machine (1) according to any one of the preceding claims, **characterized in that** the drive motor (10) is designed as a pancake motor (10), preferably as a brushless direct current motor (10) operated by way of direct current.

## Revendications

1. Machine (1) de soudage automatique dévolue au soudage marginal de nappes de matière plastique en chevauchement, comprenant un cadre mobile de support (2), un appareil de chauffage (6) conçu pour provoquer une fusion desdites nappes de matière plastique, et au moins deux rouleaux opposés de pression (18) et d'avance (18') qui tournent en sens inverse l'un de l'autre, **caractérisée par le fait que** les rouleaux de pression (18) et d'avance (18') sont entraînés par un système d'entraînement, par l'intermédiaire d'un arbre souple (15, 15') respectif, ledit système d'entraînement étant doté d'un moteur d'entraînement (10) et d'au moins une transmission (12), en vue d'entraîner lesdits rouleaux de pression et d'avance (18, respectivement 18'), et ladite transmission (12) à présence minimale étant réalisée sous la forme d'une transmission (12) à vis sans fin, de préférence en tant que transmission réductrice (12) à vis sans fin, laquelle transmission (12) à vis sans fin comporte une vis sans fin (13) et au moins deux roues (14, 14') à vis sans fin, qui tournent dans des sens opposés et sont entraînées par ladite vis sans fin (13).

2. Machine (1) de soudage automatique selon la revendication 1, **caractérisée par le fait que** le cadre de support (2) comporte un étrier (16) en porte-à-faux fixe et dépourvu de mobilité, muni du rouleau d'avance (18'), et un étrier (17) en porte-à-faux à mobilité pivotante, muni du rouleau de pression (18).

3. Machine (1) de soudage automatique selon la revendication 2, **caractérisée par le fait que** les deux étriers (16, respectivement 17) en porte-à-faux sont creux et logent, à chaque fois, un arbre souple (15', respectivement 15) dans l'espace interne.

4. Machine (1) de soudage automatique selon l'une des revendications précédentes, **caractérisée par le fait que** ladite machine (1) de soudage automatique est équipée d'un dispositif de serrage (19), conçu pour engendrer une force de serrage entre les rouleaux opposés de pression et/ou d'avance (18, respectivement 18').

5. Machine (1) de soudage automatique selon la revendication 4, **caractérisée par le fait que** l'étrier (17) en porte-à-faux, à mobilité pivotante, est doté du dispositif de serrage (19) conçu pour engendrer une force de serrage entre les rouleaux opposés de pression et/ou d'avance (18, respectivement 18').

6. Machine (1) de soudage automatique selon la revendication 4 ou 5, **caractérisée par le fait que** le dispositif de serrage (19) comprend un élément élastique (20) remplaçable, affecté au réglage de la force de serrage, et un levier d'actionnement (21) conçu pour imprimer des mouvements à l'étrier pivotant (17) en porte-à-faux.

7. Machine (1) de soudage automatique selon l'une des revendications précédentes, **caractérisée par le fait que** le dispositif de serrage (19) peut être arrêté dans une position ouverte ou fermée, que les rouleaux de pression et/ou d'avance (18, respectivement 18') occupent l'un par rapport à l'autre.

8. Machine (1) de soudage automatique selon la revendication 7, **caractérisée par le fait que** le levier d'actionnement (21) est relié à un levier (22) qui est relié, à son tour, à l'appareil de chauffage (6) de façon telle que ledit appareil de chauffage (6) puisse être rétracté et déployé par l'intermédiaire dudit levier d'actionnement (21) du dispositif de serrage (19).

9. Machine (1) de soudage automatique selon l'une des revendications précédentes, **caractérisée par le fait que** l'appareil de chauffage (6) est réalisé comme une soufflante à air chaud, dotée d'une buse à air chaud orientée vers les nappes de matière plastique devant être soudées, et/ou comme un coin chauffant interposé entre lesdites nappes de matière plastique.

10. Machine (1) de soudage automatique selon l'une des revendications précédentes, **caractérisée par le fait que** les rouleaux de pression et/ou d'avance (18, respectivement 18') présentent un diamètre inférieur à 25 mm, de préférence compris entre 20 mm et 25 mm.

11. Machine (1) de soudage automatique selon l'une des revendications précédentes, **caractérisée par le fait que** le moteur d'entraînement (10) est réalisé sous la forme d'un moteur (10) à rotor discoïdal, de préférence en tant que moteur (10) à courant continu dépourvu de balais et actionné par courant continu.
